# NEUE EUROPÄISCHE PATENTSCHRIFT

(11) **EP 1 464 557 B2**
(45) Veröffentlichungstag und Bekanntmachung des Hinweises auf die Entscheidung über den Einspruch: **19.09.2012**
(45) Hinweis auf die Patenterteilung: 17.05.2006
(21) Anmeldenummer: 04006303.4
(22) Anmeldetag: 17.03.2004
(51) Int. Cl.: B60T 17/02, B60T 11/32, B60T 7/10

(54) **Druckluftaufbereitungsgerät**
Compressed air treament device
Dispositif de traitement d'air comprimé

(30) Priorität: 01.04.2003 DE 10314642
(43) Veröffentlichungstag der Anmeldung: 06.10.2004
(73) Patentinhaber: Haldex Brake Products GmbH, 69123 Heidelberg (DE)
(72) Erfinder: Aumüller, Ralf, 60437 Frankfurt/Main (DE); Heer, Siegfried, 69168 Wiesloch (DE); Nöcker, Joachim, 69412 Eberbach (DE)
(74) Vertreter: Rehberg Hüppe + Partner

(56) Entgegenhaltungen:
- EP-A- 0 689 117
- EP-A- 0 995 659
- EP-A2- 0 689 117
- EP-A2- 1 004 495
- WO-A-92/11151
- WO-A-96/34785
- WO-A-03/008250
- WO-A2-03/008250
- DE-A- 19 835 638
- DE-A1- 3 535 973
- DE-A1- 10 251 249
- DE-A1- 19 835 638
- DE-C- 3 506 419
- DE-C- 19 638 226
- DE-C1- 3 506 419
- DE-C1- 19 638 226

## Beschreibung

Die Erfindung betrifft ein Druckluftaufbereitungsgerät mit einem Eingangsanschluss für eine von einem Kompressor herangeführte Leitung, mit einem Druckregler für den vom Kompressor zu den Kreisen gelieferten Druck, einem Mehrkreisschutzventil, mehreren Ausgangsanschlüssen zu den einzelnen Kreisen einschließlich eines Feststellbremsanschlusses für eine zu Feststellbremszylindern führende Leitung, und mit einer Steuerelektronik, wobei das Druckluftaufbereitungsgerät eine Ventilanordnung zum gesteuerten Belüften oder Absperren des Feststellbremsanschlusses infolge eines von der Steuerelektronik generierten Signals aufweist. Solche Druckluftaufbereitungsgeräte werden in der Regel einem Kompressor nachgeschaltet und nehmen verschiedene Bauteile und Ventile in sich auf. Das Druckluftaufbereitungsgerät weist also nicht nur einen Druckregler, sondern auch ein integriertes Mehrkreisschutzventil auf. Es kann zusätzlich einen Lufttrockner besitzen.

### STAND DER TECHNIK

Ein Druckluftaufbereitungsgerät der eingangs beschriebenen Art ist aus der DE 196 38 226 C1 bekannt. Das Gehäuse des Druckluftaufbereitungsgeräts weist einen Eingangsanschluss auf, an den eine von einem Kompressor herangeführte Leitung angeschlossen ist. Im Gehäuse des Druckluftaufbereitungsgeräts ist ein Druckregler integriert angeordnet, der einen in die Atmosphäre führenden Entlüftungsanschluss aufweist und so betätigt wird, dass er zwischen einer Lastlaufphase und einer Leerlaufphase schaltet. In der Lastlaufphase gelangt die Druckluft über einen Lufttrockner und ein Rückschlagventil in eine Zentralbelüftung, also einen Raum, mit dem alle einzelnen zu den Kreisen führenden Leitungen in Verbindung stehen. Für jeden Kreis ist als Bestandteil eines Mehrkreisschutzventils je ein Überströmventil vorgesehen, welches auch in allgemeiner Form als Drucksicherungsventil ausgebildet sein kann. Bei diesen Drucksicherungsventilen handelt es sich möglicherweise um elektrisch ansteuerbare Magnetventile. Es ist eine gemeinsame Steuerelektronik vorgesehen, die zur Signalverarbeitung und zur Ansteuerung der Drucksicherungsventile sowie weiterer Ventile, die beispielsweise in der Regeneration eingesetzt werden, angesteuert werden. Das bekannte Druckluftaufbereitungsgerät weist auch einen Feststellbremsanschluss auf, also einen Anschluss, an den eine zu den Feststellbremszylindern führende Leitung angeschlossen wird. Diese Leitung zweigt hinter dem Drucksicherungsventil eines Kreises ab und führt über das übliche Handbremsventil zu den Federspeicherbremszylindern. In dieser Leitung ist kein Druckluftvorratsbehälter vorgesehen, da die für das Lösen der Federspeicherbremszylinder erforderliche Luftmenge gering ist. Das Drucksicherungsventil dieses Kreises, von dem die zu dem Feststellbremsanschluss führende Leitung abzweigt, ist im Vergleich zu den anderen Drucksicherungsventilen modifiziert ausgebildet. Es weist eine pneumatisch ansteuerbare Ventilanordnung zum gesteuerten Belüften oder Absperren des Feststellbremsanschlusses auf. Das Regenerationsventil wird hier in einer zweiten Funktion zum Ansteuern der Ventilanordnung an dem Drucksicherungsventil dieses Kreises genutzt. Die Ventilanordnung erlaubt es, zwei unterschiedliche Stellungen einzunehmen, nämlich entweder die Belüftungsstellung, in der die zu dem Feststellbremsanschluss führende Leitung belüftet wird. Die andere Stellung ist die Absperrstellung, in der diese Leitung abgesperrt wird. Die Ansteuerung der Ventilanordnung erfolgt über das Regenerationsventil, welches seinerseits wiederum sein Steuersignal von der Steuerelektronik erhält. In der Absperrstellung ist die Versorgung der Federspeicherbremse mit Druckluft unterbrochen, so dass eine Betätigung des Handbremsventils mit seiner eigenen Entlüftung zwar noch zu einem Einlegen der Feststellbremse genutzt werden kann. Es ist aber nicht mehr möglich, die Feststellbremse nachfolgend zu lösen. Diese Sicherheitsfunktion kann in manchen Situationen sinnvoll sein.

Die DE 196 38 226 C1 zeigt in Fig. 2 eine zweite Ausführungsform, bei der das Sperrventil für die Versorgungsleitung zu den Federspeichern der Feststellbremse nicht in dem Druckluftaufbereitungsgerät integriert, sondern außerhalb desselben vor dem Handbremsventil angeordnet ist. Die Steuerelektronik des Druckluftaufbereitungsgeräts weist einen elektrischen Ausgangsanschluss auf, über die ein Signal entnommen und auf das elektrisch ansteuerbare Sperrventil aufgebbar ist. Das Sperrventil nimmt dann seine Absperrstellung ein, während die Durchgangs- oder Belüftungsstellung von einer mechanischen Feder bereitgestellt wird.

Das bekannte und in allen modernen Bremsanlagen vorgesehene Handbremsventil, welches zum Be- und Entlüften der Federspeicherbremszylinder dient, sei es indirekt, sei es direkt, erfordert eine Mehrzahl von Leitungen und Leitungsanschlüssen. Da das Handbremsventil immer im Fahrerhaus des Fahrzeugs angeordnet sein muss, müssen die entsprechenden Leitungen auch bis dorthin verlegt werden. Dies ist entsprechend aufwändig.

Aus der DE 198 35 638 A1 ist ein Druckluftaufbereitungsgerät mit einem Eingangsanschluss für eine von einem Kompressor herangeführte Leitung vorgesehen. Das Druckluftaufbereitungsgerät weist einen Druckregler, ein Mehrkreisschutzventil und mehrere Ausgangsanschlüsse zu den einzelnen Kreisen einschließlich eines Feststellbremsanschlusses für eine zu Feststellbremszylindern führende Leitung auf. Es ist auch eine Steuerelektronik vorgesehen. Das Druckluftaufbereitungsgerät besitzt keine Ventilanordnung zum gesteuerten Belüften oder Absperren des Feststellbremsanschlusses. Es kann ein Rückschlagventil am Druckluftaufbereitungsgerät integriert sein, um bei einem Leitungsbruch im Kreis III eine Absicherung der angeschlossenen Feststellbremsanlage zu gewährleisten. Im Kreis III, also außerhalb des Druckluftaufbereitungsgeräts, kann ein Entlüftungsventil für die Feststellbremsanlage vorgesehen sein.

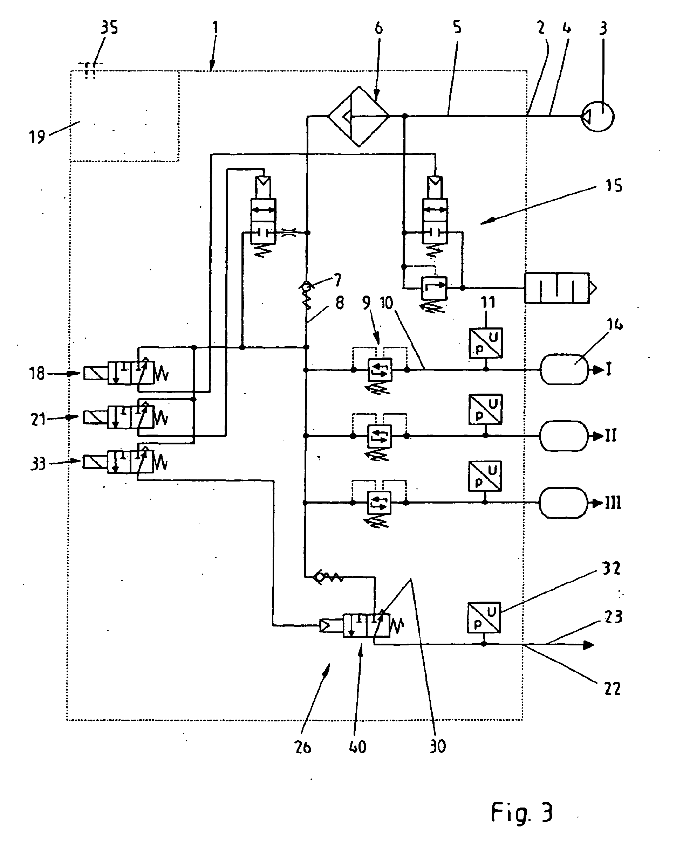

Die WO 03/008250 A zeigt eine Vorrichtung zur Behandlung von Druckluft in einem Nutzfahrzeug. Die Vorrichtung besitzt ein gemeinsames Gehäuse mit einem Eingangsanschluss, durch den von einem Kompressor herangeführte Druckluft angeliefert wird. An dem gemeinsamen Gehäuse ist eine elektronische Steuereinheit angeflanscht, die zur Steuerung verschiedener elektropneumatischer Komponenten ausgebildet ist. Das gemeinsame Gehäuse weist mindestens einen Auslass für Druckluft auf, der mit einem Vorratsbehälter verbunden ist, um hieraus die Betriebsbremse zu versorgen. Im Innern des gemeinsamen Gehäuses sind die elektropneumatische Komponenten angeordnet, die zur Verteilung der Druckluft in den oder die Behälter dienen. Die Vorrichtung weist auch einen Ausgangsanschluss auf, der zur Versorgung von einem oder mehreren Betätigungseinheiten einer Parkbremse dient. Die Druckschrift enthält einen Hinweis darauf, dass die Parkbremse direkt durch die Vorrichtung zur Behandlung der Druckluft gesteuert werden soll, und nicht etwa durch eine funktionale spezifische Einheit, die an anderer Stelle des Fahrzeugs angeordnet ist. Die Steuerung der Parkbremse soll sich nicht nur auf die Versorgung der Betätigungseinheiten mit Druckluft beziehen, sondern soll auch spezifische Informationen betreffend das Lösen der Parkbremse beinhalten. Die Versorgung der Parkbremse soll mit Druckluft erfolgen. Mit dem in Fig. 3 dargestellten Ventil ist das Einlegen der Parkbremse nicht möglich. Das dargestellte Ventil weist nur zwei Stellungen auf, nämlich eine Durchgangsstellung und eine Sperrstellung. Das dargestellte Ventil wird von einer Feder in die Sperrstellung beaufschlagt und ist als Magnetventil elektrisch ansteuerbar.

### AUFGABE DER ERFINDUNG

Der Erfindung liegt die Aufgabe zugrunde, ein Druckluftaufbereitungsgerät der eingangs beschriebenen Art aufzuzeigen, welches vergleichsweise weniger aufwändig ist und bei dem einige Leitungen und Anschlüsse eingespart werden.

### LÖSUNG

Diese Aufgabe wird durch ein Druckluftaufbereitungsgerät mit den Merkmalen des Patentanspruchs 1 gelöst.

### BESCHREIBUNG DER ERFINDUNG

Die Erfindung geht von dem Gedanken aus, in das Druckluftaufbereitungsgerät eine Ventilanordnung zu integrieren, die der Feststellbremse zugeordnet ist. Diese Ventilanordnung soll nicht nur ein gesteuertes Belüften oder Absperren des Feststellbremsanschlusses in Abhängigkeit von einem von der Steuerelektronik generierten Signal aufweisen. Die Ventilanordnung muss auch eine Entlüftungsfunktion für den Feststellbremsanschluss und die daran angeschlossene Leitung besitzen. Die Erfindung umfasst gleichsam die Integration des Handbremsventils oder zumindest doch wesentlicher Teile desselben, einschließlich der Entlüftungsfunktion in das Druckluftaufbereitungsgerät. Es gehört mit zu der Erfindung, auf das bisher allgemein eingesetzte und für unabdingbar gehaltene Handbremsventil zu verzichten. Da freilich das Betätigen der Hilfs- und/oder Feststellbremse aus der Fahrerkabine heraus möglich sein muss, kann das dort üblicherweise bisher vorgesehene Handbremsventil in Fortfall kommen und beispielsweise durch einen einfachen elektrischen Schalter ersetzt werden. Mit diesem Schalter kann der Fahrer ein Steuersignal abgeben, wenn er die Feststellbremse entsprechend zu betätigen wünscht. Dieses Steuersignal wird der Steuerelektronik in dem Druckluftaufbereitungsgerät über einen elektrischen Eingangsanschluss mitgeteilt und in der Steuerelektronik verarbeitet. Es wird ein Steuersignal generiert, welches die Ventilanordnung entweder direkt oder indirekt schaltet bzw. steuert. Über den Eingangsanschluss an der Steuerelektronik oder auch über zusätzliche weitere Anschlüsse können weitere Steuersignale, die sich auf die Hilfs- und/oder Feststellbremse auswirken sollen, aufgegeben werden, beispielsweise ein oder mehrere Steuersignale über einen CAN-Bus. Auf diese Weise kann beispielsweise auch die Hilfs- und/oder Feststellbremse als Anfahrhilfe am Berg eingesetzt bzw. genutzt werden. Mit dem Entfall des manuell betätigbaren Handbremsventils entfallen auch die entsprechenden Leitungsverbindungen, Verschraubungen und Anschlüsse. Erfindungsgemäß ist zwischen der Ventilanordnung und dem Feststellbremsanschluss ein Drucksensor angeschlossen ist, dessen Signale der Steuerelektronik zugeführt werden. Dies gilt insbesondere bei Realisierung einer gestuften Hilfsbremse.

Die Ventilanordnung kann zwei separat steuerbare Schaltventile aufweisen, von denen das eine Schaltventil eine Durchgangs- und eine Absperrstellung besitzt, während das andere Schaltventil eine Absperrstellung und eine Entlüftungsstellung aufweist. Damit ist die Realisierung einer gestuften Hilfsbremse neben den üblichen Funktionen einer Feststellbremse möglich. Durch entsprechende Steuerung kann der Druck in der zu den Feststellbremszylindern führenden Leitung stufenlos eingestellt werden. Dies ist sowohl dann möglich, wenn die am Feststellbremsanschluss angeschlossene Leitung eine direkte Leitung ist. Im anderen Fall kann bei einer Relaissteuerung diese Leitung auch als Steuerleitung bezeichnet werden. Eine weitere Möglichkeit für die Ausbildung der Ventilanordnung besteht darin, ein 3/2-Wegeventil mit eigener Entlüftung vorzusehen.

Die über die Ventilanordnung zu dem Feststellbremsanschluss führende Leitung kann von einem anderen Kreis nach dessen Überströmventil oder Drucksicherungsventil abzweigend angeschlossen sein. Es ist aber auch möglich, dass die die Ventilanordnung enthaltende und zu dem Feststellbremsanschluss führende Leitung unter Überbrückung der Überströmventile oder Drucksicherungsventile eines anderen Kreise an eine Zentralbelüftung für sämtliche Kreise angeschlossen ist. Es versteht sich, dass dieser Anschluss stromab des Rückschlagventils angeschlossen ist, an dem die Zentralbelüftung beginnt. Auf diese Weise kann vorteilhaft ein Überströmventil oder ein Drucksicherungsventil eingespart werden, da die Ventilanordnung auch eine Sicherheitsfunktion erbringt. So kann das Ventil, welches die Belüftungs- und die Absperrfunktion erbringt, über eine mechanische Feder in die Absperrstellung beaufschlagt sein, damit beispielsweise bei einem Stromausfall oder auch einer gewollt verursachten Stromunterbrechung, insbesondere beim Ausschalten der Zündung, die Absperrstellung eingenommen wird, damit die Feststellbremse in einem solchen Schadensfall die Stellung beibehält, die sie vor Eintritt des Schadensereignisses hatte.

Bei der Ausbildung des oder der Ventile der Ventilanordnung gibt es wiederum verschiedene Möglichkeiten. Es können über Magnetventile vorgesteuerte Schaltventile eingesetzt werden, also pneumatisch ansteuerbare Ventile, die von Magnetventilen vorgesteuert werden. Auf diese Weise werden die elektrischen Signale der Steuerelektronik an die Magnetventile gegeben. Diese schalten wiederum die pneumatisch ausgebildeten Ventile. Es ist aber auch möglich, direkt gesteuerte Magnetventile einzusetzen, also pneumatisch ausgebildete Schaltventile, die magnetisch angesteuert werden, so dass die Signale der Steuerelektronik direkt zur Einwirkung gebracht werden. Diese Möglichkeiten sind sowohl dann gegeben, wenn die Ventilanordnung zwei Ventile aufweist, als auch dann, wenn die Ventilanordnung nur ein Ventil als 3/2-Wegeventil besitzt. Die beiden separat steuerbaren Ventile sind in der zu dem Feststellbremsanschluss führenden Leitung in Reihe hintereinander vorgesehen, wie es die Funktion erfordert.

Alle diese Ventile der Ventilanordnung besitzen mindestens zwei Stellungen. Wenn die Entlüftungsstellung des Feststellbremsanschlusses über eine mechanische Feder herbeigeführt wird, ergibt sich die Sicherheitsfunktion, dass bei Stromausfall die Feststellbremse eingelegt wird.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt einen schematisierten Schaltplan mit den wesentlichen Elementen des Druckluftaufbereitungsgeräts in einer ersten Ausführungsform.
- **Fig. 2**: zeigt einen schematisierten Schaltplan mit den wesentlichen Elementen des Druckluftaufbereitungsgeräts in einer zweiten Ausführungsform (nicht erfindungsgemäß).
- **Fig. 3**: zeigt eine dritte Ausführungsform der Elemente des Druckluftaufbereitungsgeräts.
- **Fig. 4**: zeigt eine vierte mögliche Ausführungsform der Elemente des Druckluftaufbereitungsgeräts.
- **Fig. 5**: zeigt eine fünfte Ausführungsform der Elemente des Druckluftaufbereitungsgeräts.
- **Fig. 6**: zeigt eine weitere Ausführungsform der Elemente des Druckluftaufbereitungsgeräts.
- **Fig. 7**: zeigt eine weitere Ausführungsform der Elemente des Druckluftaufbereitungsgeräts.

### FIGURENBESCHREIBUNG

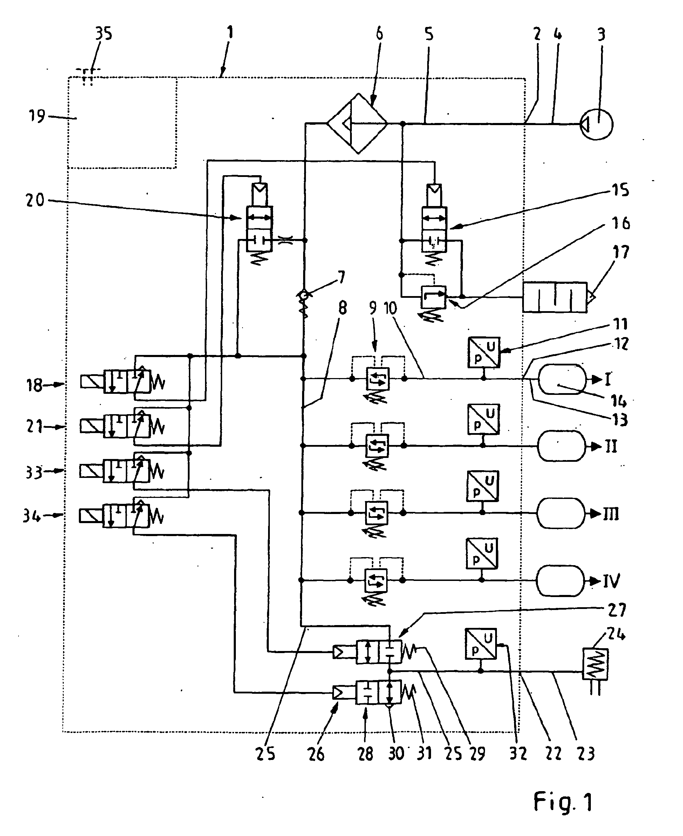

**Fig. 1** zeigt das gemeinsame Gehäuse 1 des Druckluftaufbereitungsgeräts. Am Gehäuse 1 ist ein Eingangsanschluss 2 verwirklicht, an den eine von einem Kompressor 3 herangeführte Leitung 4 angeschlossen wird. Am Eingangsanschluss 2 beginnt eine pneumatische Leitung 5, die über einen Lufttrockner 6 bis zu einem Rückschlagventil 7 führt. Die Leitung 5 setzt sich dann in einer Zentralbelüftung 8 fort, die konstruktiv als eine Zentralbohrung in dem Gehäuse 1 ausgebildet ist. Über die Zentralbelüftung 8 werden in bekannter Weise sämtliche Kreise mit Druckluft versorgt. In jedem Kreis ist ein Drucksicherungsventil 9 angeordnet, welches auch als Überströmventil mit begrenzter Rückströmung ausgebildet sein kann. So führt eine dem Kreis I zugeordnete Leitung 10 von der Zentralbelüftung 8 über das Drucksicherungsventil 9, einen Drucksensor 11 zu einem Ausgangsanschluss 12 am Gehäuse 1. Der Ausgangsanschluss 12 dient dem Anschluss einer Leitung 13, die zu einem Vorratsbehälter 14 des Kreises I führt. Die Kreise II, III und IV sind genau so aufgebaut und an die Zentralbelüftung 8 angeschlossen, wie dies im Einzelnen anhand des Kreises I beschrieben wurde.

In dem Druckluftaufbereitungsgerät ist auch ein Druckregler 15 integriert untergebracht. Wesentliches Element des Druckreglers 15 ist ein pneumatisch ansteuerbares Ventil mit einer Durchgangs- und einer Sperrstellung. Parallel zu diesem Ventil ist ein Sicherheitsventil 16 vorgesehen. Beide Ventile führen in bekannter Weise zu einer Entlüftungsöffnung 17 am Gehäuse 1. Das Ventil des Druckreglers 15 wird über ein Magnetventil 18 vorgesteuert. Das Magnetventil 18 erhält seine Druckluft ebenfalls von der Zentralbelüftung 8 und weist ansonsten eine nicht dargestellte elektrische Leitungsverbindung zu einer Steuerelektronik 19 auf, die ebenfalls integral in dem Gehäuse 1 des Druckluftaufbereitungsgeräts angeordnet ist. Es versteht sich, dass auch entsprechende elektrische Leitungen zwischen sämtlichen Drucksensoren 11 und der Steuerelektronik 19 vorgesehen sind.

Das Druckluftaufbereitungsgerät weist in der dargestellten Ausführungsform auch ein Regenerationsventil 20 auf, welches über ein Magnetventil 21 vorgesteuert wird. Auch das Magnetventil 21 erhält seine Steuersignale von der Steuerelektronik 19.

Am Gehäuse 1 ist weiterhin ein Feststellbremsanschluss 22 verwirklicht. Der Feststellbremsanschluss 22 dient dem Anschluss einer Leitung 23, die als direkt gesteuerte Leitung zu den Feststellbremszylindern 24 führt. Von der Zentralbelüftung 8 zweigt eine Leitung 25 ab. Die Leitung 25 endet an dem Feststellbremsanschluss. In der Leitung 25 ist eine Ventilanordnung 26 untergebracht. Die Ventilanordnung 26 weist ein erstes pneumatisch ansteuerbares Schaltventil 27 und ein zweites ebenfalls pneumatisch ansteuerbares Schaltventil 28 auf. Jedes der beiden Schaltventile 27 und 28 besitzt zwei Stellungen. So weist das erste Schaltventil 27 eine Durchgangs- oder Belüftungsstellung und eine Absperrstellung auf. Eine Feder 29 ist dem Schaltventil 27 so zugeordnet, dass das Schaltventil 27 in nicht angesteuertem Zustand die Absperrstellung einnimmt. Das zweite Schaltventil 28, welches in der aus Fig. 1 ersichtlichen Weise zu dem ersten Schaltventil 27 in der Leitung 25 angeordnet ist, besitzt eine eigene Entlüftung 30, über die die Entlüftung des Feststellbremsanschlusses 22 und in der Folge die Entlüftung der Federspeicherbremszylinder 24 und damit das Einlegen der Hilfs- und/oder Feststellbremse erfolgt. Ansonsten besitzt auch das zweite Schaltventil 28 zwei Stellungen, nämlich eine Absperrstellung und eine Durchgangs- bzw. Entlüftungsstellung. Eine Feder 31 beaufschlagt die Entlüftungsstellung, in der kein pneumatisches Steuersignal an dem Schaltventil 28 anliegt. In dem Teil der Leitung 25, die von der Ventilanordnung 26 zu dem Feststellbremsanschluss 22 führt, ist ein Drucksensor 32 vorgesehen, dessen Spannungssignal ebenfalls der Steuerelektronik 19 zugeführt wird.

Für die pneumatische Vorsteuerung der beiden Schaltventile 27 und 28 sind Magnetventile 33 und 34 vorgesehen. Auch diese Magnetventile 33 und 34 stehen über elektrische Leitungen (nicht dargestellt) mit der Steuerelektronik 19 in Verbindung und werden von dort aus entsprechend angesteuert. Die Druckluftversorgung der Magnetventile 33 und 34 erfolgt, wie ersichtlich, auch über die Zentralbelüftung 8. Die Magnetventile 33 und 34 besitzen eine eigene Entlüftung, ebenso wie die Magnetventile 18 und 21. Sämtliche Magnetventile sind so ausgebildet und angeordnet, wie dies anhand der zeichnerischen Darstellung verdeutlicht ist.

Die Steuerelektronik 19 weist einen elektrischen Eingangsanschluss 35 auf, der der Einleitung eines Steuersignals dient. Ein solches Steuersignal kann beispielsweise von einem in der Fahrerkabine des Fahrzeugs angeordneten elektrischen Schalter erzeugt und damit an die Steuerelektronik 19 weitergegeben werden. Es versteht sich, dass die Steuerelektronik 19 dieses Steuersignal verarbeitet und die Magnetventile 33 und 34 entsprechend ansteuert. Statt des einen dargestellten Eingangsanschlusses 35 können auch mehrere solcher Eingangsanschlüsse vorgesehen sein, um auch weitere Steuersignale der Steuerelektronik 19 aufgeben zu können. Ein weiteres solches Steuersignal kann in einem von der Zündung des Kraftfahrzeugs abgeleiteten Signal bestehen. Auch Steuersignale einer CAN-BUS-Verbindung oder Steuersignale von sonstigen Elementen einer Druckluftbremsanlage oder einer Fahrzeugsteueranlage können hier Eingang und Berücksichtigung an der Steuerelektronik 19 finden. Es ist aber nicht nur möglich, von außen der Steuerelektronik 19 zu verarbeitende Signale zuzuführen. Signale können auch aus dem Innern des Druckluftaufbereitungsgeräts abgeleitet werden, beispielsweise von den verschiedenen Drucksensoren 11 und 32. Auch diese Signale werden der Steuerelektronik 19 zugeführt, dort verarbeitet und in an die verschiedenen Magnetventile abzugebende Steuersignale umgewandelt.

### Die Funktion des Druckluftaufbereitungsgeräts im Hinblick auf die Erfindung ist folgende:

Ausgehend von der Darstellung gemäß Fig. 1 befindet sich das abgestellte Fahrzeug in Parkposition. Der Feststellbremsanschluss 22 und damit die Federspeicherbremszylinder 24 sind über die Entlüftung 30 des zweiten Schaltventils 28 der Ventilanordnung 26 entlüftet und die Feststellbremse damit eingelegt. Beim Einschalten der Zündung wird ein entsprechendes Signal der Steuerelektronik 19 aufgegeben, so dass dieses und die von den Drucksensoren 11 und 32 anstehenden Signale verarbeitet werden. Mit dem Starten des Motors wird auch der Kompressor 3 in Gang gesetzt. Der Druckregler befindet sich in der Lastlaufphase, so dass die Vorratsbehälter 14 der einzelnen Kreise befüllt werden, bis der vorgesehene erreichte Druck die vollständige Befüllung an die Steuerelektronik 19 signalisiert. Über das Magnetventil 18 wird der Druckregler 15 in die Leerlaufphase umgeschaltet. Über ein weiteres zusätzliches Signal, welches der Steuerelektronik 19 ebenfalls über den Eingangsanschluss 35 oder einen weiteren Eingangsanschluss mitgeteilt wird, und welches dem Wunsch des Fahrers nach einem Lösen der Feststellbremse entspricht, werden die beiden Schaltventile 27 und 28 durch die Magnetventile 33 und 34 umgesteuert, so dass die Feststellbremszylinder 24 belüftet und die Feststellbremse damit gelöst wird. Das Fahrzeug kann dann hinweggefahren werden.

Während der Fahrt ist die Nutzung der Hilfs- und/oder Feststellbremse als Hilfsbremse möglich. Durch entsprechende Steuerung des Magnetventils 34 und des zweiten Schaltventils 28 kann der Druck am Feststellbremsanschluss 22 stufenlos erniedrigt werden, wobei jeweils eine entsprechende Hilfsbremswirkung eintritt. Eine Rückmeldung des Druckes an die Steuerelektronik 19 erfolgt über den Drucksensor 32. Diese Hilfsbremswirkung kann auch in Abhängigkeit von anderen Signalen ausgelöst und genutzt werden, beispielsweise bei einem Druckabfall in den Betriebsbremskreisen oder bei einem Signal, welches über einen CAN-BUS dem Eingangsanschluss 35 der Steuerelektronik 19 zugeführt wird. Schließlich kann beim Erreichen des Fahrziels die Feststellbremse wieder eingelegt werden. Hierzu entlüften die Magnetventile 33 und 34, falls sie nicht vorher in der Entlüftungsstellung waren, so dass die beiden Steuerventile 27 und 28 der Ventilanordnung 26 in die in Fig. 1 dargestellte Ausgangslage zurückkehren, so dass die Federspeicher entlüftet und die Federspeicherbremse damit eingelegt ist.

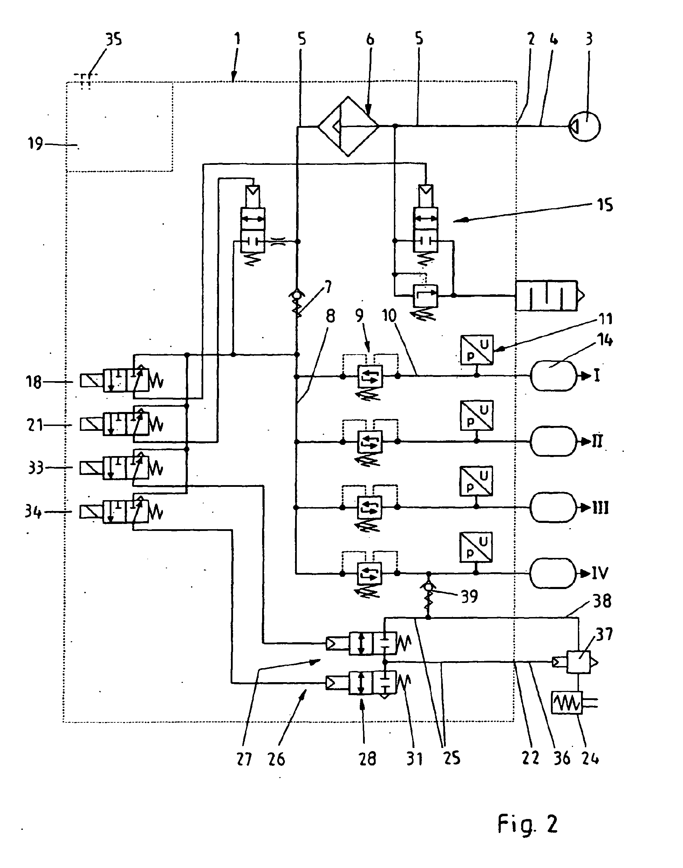

Die Ausführungsform des Druckluftaufbereitungsgeräts gemäß **Fig. 2** stimmt mit der in Fig. 1 dargestellten Ausführungsform in weiten Bereichen überein, so dass auf die diesbezügliche Beschreibung verwiesen werden kann. In Abweichung davon zweigt hier die Leitung 25 jedoch nicht von der Zentralbelüftung 8, sondern von einem der anderen Kreise, hier von dem Kreis IV hinter dessen Drucksicherungsventil 9 ab. Es fehlt ein Drucksensor 32. Am Feststellbremsanschluss 22 ist statt der direkten Leitung 23 eine Steuerleitung 36 angeschlossen, die zu einem Relaisventil 37 führt. Das Relaisventil 37 wird mit Druckluft über eine Leitung 38 versorgt, die von der Leitung 25 stromauf der Ventilanordnung 26 abzweigt. Im Anfangsteil der Leitung 25 ist ein Rückschlagventil 39 vorgesehen. Das Steuerventil 27 der Ventilanordnung 26 ist genau so ausgebildet wie bei der Ausführungsform der Fig. 1. Das Steuerventil 28 ist jedoch insofern verändert, als die beiden Schaltstellungen umgekehrt angeordnet sind. Die Feder 31 beaufschlagt hier also den Ventilkörper dieses Schaltventils 28 in die Schließstellung. Dies erbringt den Vorteil, dass das Fahrzeug bei Ausfall der Elektrik während der Fahrt fahrbereit bleibt und die Feststellbremse nicht einfällt.

Es versteht sich, dass die in Fig. 2 gegenüber Fig. 1 dargestellten Änderungen nicht alle gleichzeitig durchgeführt werden müssen. Jede der einzelnen Ausbildungen kann mit jeder anderen einzelnen Ausbildung entsprechend sinnvoll kombiniert werden. Dies gilt auch für die in den Fig. 3 bis 7 verdeutlichten Änderungen.

Auch die Ausführungsform der **Fig. 3** baut auf den zuvor gezeigten Ausführungsformen auf. Die Ventilanordnung 26 besteht hier jedoch aus einem 3/2-Wegeventil 40 mit einer Belüftungsstellung und einer Entlüftungsstellung für den Feststellbremsanschluss 22. Das 3/2-Wegeventil 40 weist seine eigene Entlüftung 30 auf und ist in der dargestellten Weise ausgebildet und angeordnet. Es wird über ein einziges Magnetventil 33 vorgesteuert. Durch Weglassen des Kreises IV ist angedeutet, dass die Anzahl der vorgeschalteten Kreise an sich beliebig ist. Die Funktion dieser Ausführungsform ist für den Fachmann verständlich.

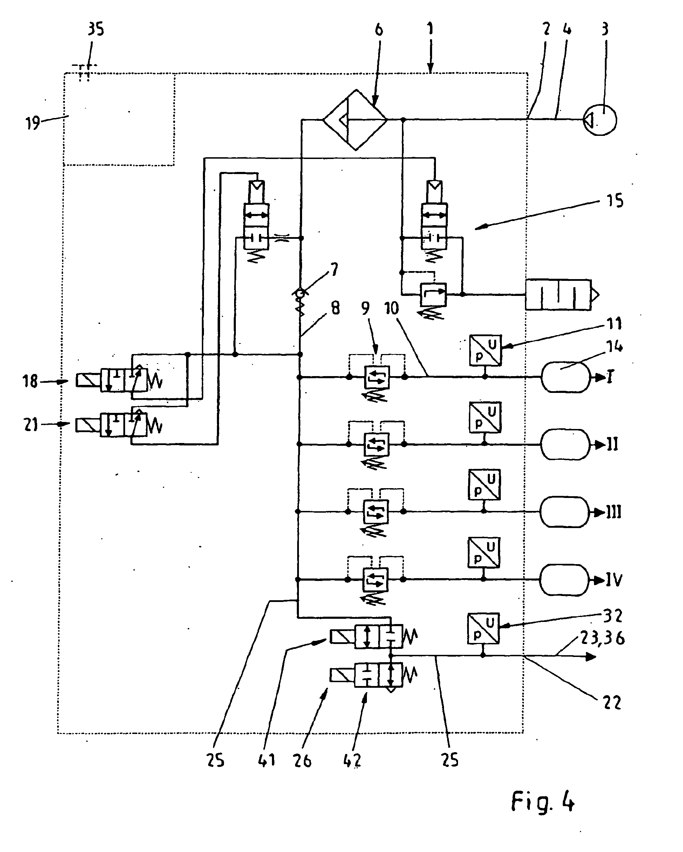

**Fig. 4** verdeutlicht weitere Abänderungsmöglichkeiten. Anstatt der vorgesteuerten Ventile sind hier zwei direkt gesteuerte Magnetventile 41 und 42 vorgesehen, die die dargestellten Schaltstellungen aufweisen, denen sinngemäß Federn zugeordnet sind. Die Magnetventile 33 und 34 als Vorsteuerventile kommen somit in Fortfall. Es versteht sich, dass die Magnetventile 41 und 42 damit direkt über die Steuerelektronik 19 angesteuert werden. Weiterhin ist überschaubar, dass anstelle der beiden direkt angesteuerten Magnetventile 41 und 42 auch ein einzelnes direkt angesteuertes Magnetventil, welches als 3/2-Wegeventil ausgebildet ist, vorgesehen sein kann. Die Leitung 25 zu dem Feststellbremsanschluss 22 zweigt hier von der Zentralbelüftung 8 ab. Sie könnte aber auch von einem der vorangehenden Kreise nach dessen Drucksicherungsventil 9 abzweigen. Am Feststellbremsanschluss 22 kann entweder eine direkte Leitung 23 oder eine Steuerleitung 36 angeschlossen sein.

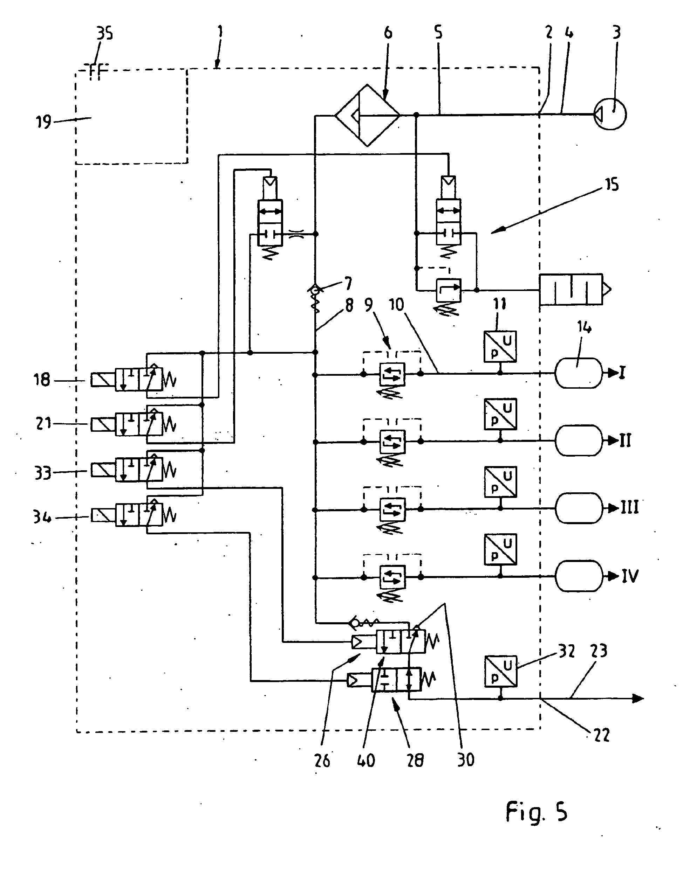

Die Ausführungsform gemäß **Fig. 5** baut auf derjenigen gemäß Fig. 3 auf. Die Ventilanordnung 26 besitzt hier ein 3/2-Wege-Ventil 40 und in Reihe damit innerhalb der Leitung 25 ein Schaltventil 28. Das 3/2-Wege-Ventil 40 wird über das Magnetventil 33 vorgesteuert. Das Schaltventil 28 wird über das Magnetventil 34 vorgesteuert. Insoweit entspricht die Vorsteuerung den Ausführungsformen der Fig. 1 und 2.

Das Ventil 40 dient zum Be- und Entlüften. Das Schaltventil 28 besitzt eine Sperrstellung und eine Durchgangsstellung.

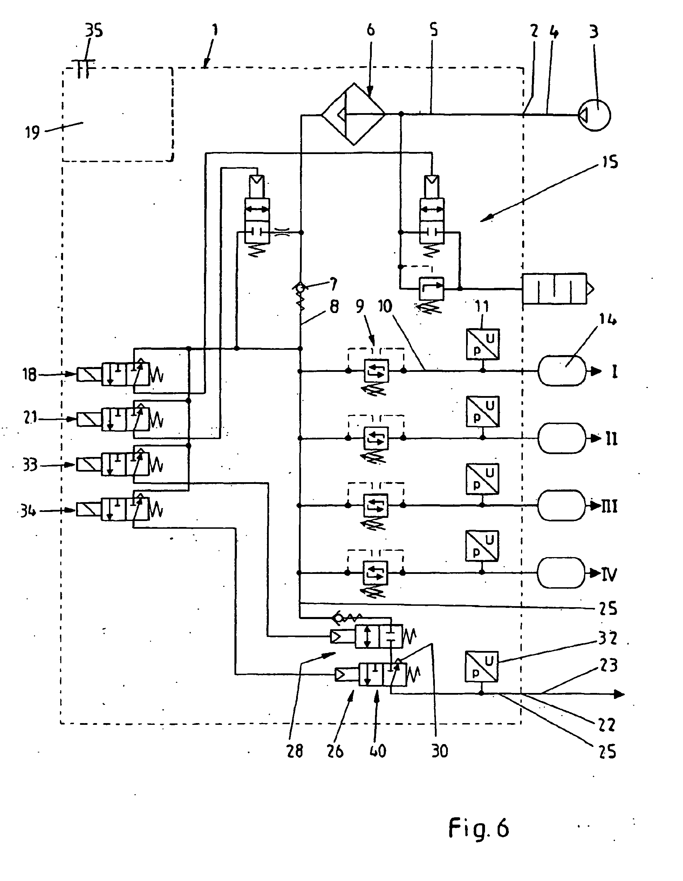

Die Ausführungsform gemäß **Fig. 6** baut auf der Ausführungsform gemäß Fig. 5 auf. In der Leitung 25 sind auch hier innerhalb der Ventilanordnung 26 das Schaltventil 28 sowie das 3/2-Wege-Ventil 40, jedoch in umgekehrter Reihenfolge, angeordnet. Das Schaltventil 28 besitzt eine Sperrstellung und eine Durchgangsstellung. Das 3/2-Wege-Ventil 40 besitzt eine eigene Entlüftung 30 und dient damit dem Be- und Entlüften sowie in Verbindung mit dem Schaltventil 28 zur Herbeiführung einer Abschlussstellung.

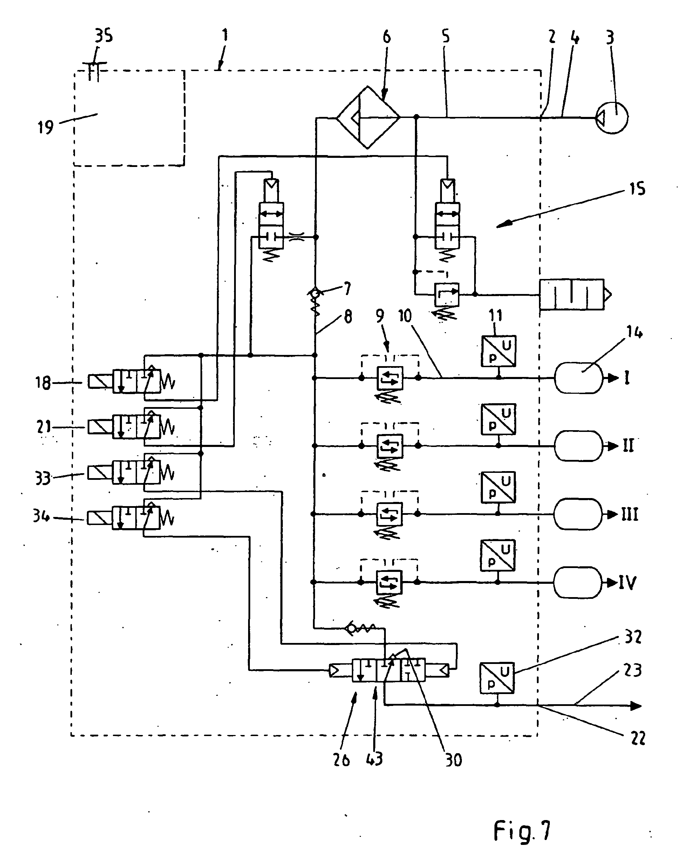

Bei der Ausführungsform gemäß **Fig. 7** ist ein 3/3-Wege-Ventil 43 vorgesehen, welches die Ventilanordnung 26 bildet und einen eigenen Entlüftungsanschluss besitzt. Das 3/3-WegeVentil wird über die Magnetventile 33 und 34 vorgesteuert. Es besitzt eine Belüftungsstellung, eine Entlüftungsstellung und eine Sperrstellung.

### BEZUGSZEICHENLISTE

- 1: Gehäuse
- 2: Eingangsanschluss
- 3: Kompressor
- 4: Leitung
- 5: Leitung
- 6: Lufttrockner
- 7: Rückschlagventil
- 8: Zentralbelüftung
- 9: Drucksicherungsventil
- 10: Leitung

- 11: Drucksensor
- 12: Ausgangsanschluss
- 13: Leitung
- 14: Vorratsbehälter
- 15: Druckregler
- 16: Sicherheitsventil
- 17: Entlüftungsöffnung
- 18: Magnetventil
- 19: Steuerelektronik
- 20: Regenerationsventil

- 21: Magnetventil
- 22: Feststellbremsanschluss
- 23: Leitung
- 24: Feststellbremszylinder
- 25: Leitung
- 26: Ventilanordnung
- 27: Schaltventil
- 28: Schaltventil
- 29: Feder
- 30: Entlüftung

- 31: Feder
- 32: Drucksensor
- 33: Magnetventil
- 34: Magnetventil
- 35: Eingansanschluss
- 36: Steuerleitung
- 37: Relaisventil
- 38: Leitung
- 39: Rückschlagventil
- 40: 3/2-Wege-Ventil

- 41: Magnetventil
- 42: Magnetventil
- 43: 3/3-Wege-Ventil

## Patentansprüche

1. Druckluftaufbereitungsgerät mit einem Eingangsanschluss (2) für eine von einem Kompressor (3) herangeführte Leitung (4), mit einem Druckregler (15) *für den vom Kompressor zu den Kreisen gelieferten Druck,* einem mehrere Drucksicherungsventile (9) aufweisenden Mehrkreisschutzventil, mehreren Ausgangsanschlüssen (12) zu den einzelnen Kreisen (I, II, usw.) einschließlich eines Feststellbremsanschlusses (22) für eine zu Feststellbremszylindern (24) führende Leitung (23), und mit einer Steuerelektronik (19), wobei das Druckluftaufbereitungsgerät eine Ventilanordnung (26) zum gesteuerten Belüften *und* Absperren des Feststellbremsanschlusses (22) infolge eines von der Steuerelektronik (19) generierten Signals aufweist, **dadurch gekennzeichnet, dass** die Ventilanordnung (26) auch zum Entlüften des Feststellbremsanschlusses (22) infolge eines von der Steuerelektronik (19) generierten Signals ausgebildet ist und dass die Steuerelektronik (19) einen elektrischen Eingangsanschluss (35) für ein Steuersignal aufweist, wobei zwischen der Ventilanordnung (26) und dem Feststellbremsanschluss (22) ein Drucksensor (32) angeschlossen ist, dessen Signal der Steuerelektronik (19) zugeführt wird.

2. Druckluftaufbereitungsgerät nach Anspruch 1, **dadurch gekennzeichnet, dass** die Ventilanordnung (26) zwei separat steuerbare Schaltventile (27, 28) aufweist, von denen das eine Schaltventil (27) eine Durchgangs- und eine Absperrstellung besitzt und das andere Schaltventil (28) eine Absperrstellung und eine Entlüftungsstellung aufweist.

3. Druckluftaufbereitungsgerät nach Anspruch 1, **dadurch gekennzeichnet, dass** die Ventilanordnung (26) ein 3/2-Wege-Ventil (40) mit eigener Entlüftung aufweist.

4. Druckluftaufbereitungsgerät nach einem der Ansprüche 1 bis 3, **dadurch gekennzeichnet, dass** die die Ventilanordnung (26) enthaltende und zu dem Feststellbremsanschluss (22) führende Leitung (25) unter Überbrückung der Drucksicherungsventile (9) der anderen Kreise an eine Zentralbelüftung (8) für sämtliche Kreise angeschlossen ist.

5. Druckluftaufbereitungsgerät nach einem der Ansprüche 1 bis 3, **dadurch gekennzeichnet, dass** die die Ventilanordnung (26) enthaltende und zu dem Feststellbremsanschluss (22) führende Leitung (25) nach einem Überströmventil oder einem anderen Drucksicherungsventil (9) eines anderen Kreises an eine Zentralbelüftung (8) für sämtliche Kreise angeschlossen ist.

6. Druckluftaufbereitungsgerät nach einem der Ansprüche 1 bis 5, **dadurch gekennzeichnet, dass** die Ventilanordnung (26) ein oder mehrere über ein oder mehrere Magnetventile (33, 34) vorgesteuerte Schaltventile (27, 28, 40) aufweist.

7. Druckluftaufbereitungsgerät nach einem der Ansprüche 1 bis 5, **dadurch gekennzeichnet, dass** die Ventilanordnung (26) ein oder mehrere direkt gesteuerte Magnetventile (41, 42) aufweist.

8. Druckluftaufbereitungsgerät nach einem der Ansprüche 1 bis 7, **dadurch gekennzeichnet, dass** die beiden separat steuerbaren Schaltventile (27, 28) in Reihe in der zu dem Feststellbremsanschluss (22) führenden Leitung (25) angeordnet sind.

9. Druckluftaufbereitungsgerät nach einem der Ansprüche 1 bis 8, **dadurch gekennzeichnet, dass** die der Entlüftung des Feststellbremsanschlusses (22) entsprechende Stellung von einer mechanischen Feder (31) bestimmt ist.

## Claims

1. A compressed air processing unit, comprising an inlet connection (2) to be connected to a conduit (4) being connected to a compressor (3), a pressure control unit (15) for the pressure supplied by the compressor to the circuits, a multi-circuit protection valve including a plurality of pressure protection valves (9), a plurality of outlet connections (12) to be connected to the several circuits (I, II etc.) each including a parking brake connection (22) to be connected to a conduit (23) being connected to a parking brake cylinder (24), and an electronic control unit (19), the compressed air processing unit comprising a valve arrangement (26) being designed and arranged to aerate and lock the parking brake connection (22) in a controlled way due to a signal being generated by the electronic control unit (19), **characterized in that** the valve arrangement (26) being designed and arranged also to vent the parking brake connection (22) due to a signal being generated by the electronic control unit (19) and **in that** the electronic control unit (19) comprises an electric input connection (35) for a control signal, wherein a pressure sensor (32) is connected or interposed between the valve arrangement (26) and the parking brake connection (22), wherein the signal of the pressure sensor (32) is transmitted to the electronic control unit (16).

2. Compressed air processing unit of claim 1, **characterized in that** the valve arrangement (26) includes two switching valves (27, 28) to be separately controllable, the first switching valve (27) having a passage position and a locking position and the other switching valve (28) having a locking position and a deaerating position.

3. Compressed air processing unit of claim 1, **characterized in that** the valve arrangement (26) includes a 3/2 ways valve, the 3/2 ways valve (40) having its own deaerating outlet.

4. Compressed air processing unit of one of the claims 1 to 3, **characterized in that** the conduit (25) including the valve arrangement (26) and leading to the parking brake connection (22) is connected to a central aerating system (8) for all circuits in a way to bypass the pressure protection valves (9) of the other circuits.

5. Compressed air processing unit of one of the claims 1 to 3, **characterized in that** the conduit (25) including the valve arrangement (26) and leading to the parking brake connection (22) is connected to a central aerating system (8) for all circuits in a way downstream of an overflow valve or downstream of a pressure protection valve (9) of a different type of another circuit.

6. Compressed air processing unit of one of the claims 1 to 5, **characterized in that** the valve arrangement (26) includes one or more switching valves (27, 28, 40) being designed and arranged to be pre-controlled by one or more solenoid valves (33, 34).

7. Compressed air processing unit of one of the claims 1 to 5, **characterized in that** the valve arrangement (26) includes one or more directly controlled solenoid valves (41, 42).

8. Compressed air processing unit of one of the claims 1 to 7, **characterized in that** the two separately controllable switching valves (27, 28) are arranged in series with respect to a conduit (25) leading to the parking brake connection (22).

9. Compressed air processing unit of one of the claims 1 to 8, **characterized in that** a mechanical spring (31) is arranged to determine a position in which the parking brake connection (22) is vented.

## Revendications

1. Dispositif de traitement d'air comprimé comportant un raccord d'entrée (2) pour une conduite (4) provenant d'un compresseur (3), comportant un régulateur de pression (15) pour la pression fournie par le compresseur aux circuits, une soupape de protection multicircuit comportant plusieurs soupapes de maintien de la pression (9), plusieurs raccords de sortie (12) vers les différents circuits (I, II, etc.), y compris un raccord de frein de stationnement (22) pour une conduite (23) menant aux cylindres du frein de stationnement (24), et comportant une électronique de commande (19), le dispositif de traitement d'air comprimé comportant un agencement de soupapes (26) pour l'aération commandée et la fermeture du raccord de frein de stationnement (22) à la suite d'un signal généré par l'électronique de commande (19), **caractérisé en ce que** l'agencement de soupapes (26) est conçu aussi pour la purge d'air du raccord de frein de stationnement (22) à la suite d'un signal généré par l'électronique de commande (19), et **en ce que** l'électronique de commande (19) comporte un raccord d'entrée électrique (35) pour un signal de commande, un capteur de pression (32), dont le signal est envoyé à l'électronique de commande (19), étant raccordé entre l'agencement de soupapes (26) et le raccord de frein de stationnement (22).

2. Dispositif de traitement d'air comprimé selon la revendication 1, **caractérisé en ce que** l'agencement de soupapes (26) comporte deux soupapes de commutation (27, 28) pouvant être commandées séparément, dont une soupape de commutation (27) présente une position de passage et une position de fermeture et l'autre soupape de commutation (28) présente une position de fermeture et une position de purge d'air.

3. Dispositif de traitement d'air comprimé selon la revendication 1, **caractérisé en ce que** l'agencement de soupapes (26) comporte une soupape à 3/2 voies (40) avec sa propre purge d'air.

4. Dispositif de traitement d'air comprimé selon l'une des revendications 1 à 3, **caractérisé en ce que** la conduite (25) contenant l'agencement de soupapes (26) et menant au raccord de frein de stationnement (22), est raccordée à une aération centrale (8) de tous les circuits, en pontant les soupapes de maintien de pression (9) des autres circuits.

5. Dispositif de traitement d'air comprimé selon l'une des revendications 1 à 3, **caractérisé en ce que** la conduite (25) contenant l'agencement de soupapes (26) et menant au raccord de frein de stationnement (22) est raccordée à une aération centrale (8) pour tous les circuits, en aval d'une soupape de trop-plein ou d'une autre soupape de maintien de la pression (9).

6. Dispositif de traitement d'air comprimé selon l'une des revendications 1 à 5, **caractérisé en ce que** l'agencement de soupapes (26) comporte une ou plusieurs soupapes de commutation (27, 28, 40) commandées de manière pilote par une ou plusieurs soupapes magnétiques (33. 34).

7. Dispositif de traitement d'air comprimé selon l'une des revendications 1 à 5, **caractérisé en ce que** l'agencement de soupapes (26) comporte une ou plusieurs soupapes magnétiques (41, 42) commandées directement.

8. Dispositif de traitement d'air comprimé selon l'une des revendications 1 à 7, **caractérisé en ce que** les deux soupapes de commutation (27, 28) pouvant être commandées séparément sont disposées en série dans la conduite (25) menant au raccord de frein de stationnement (22).

9. Dispositif de traitement d'air comprimé selon l'une des revendications 1 à 8, **caractérisé en ce que** la position correspondant à la purge d'air du raccord de frein de stationnement (22) est déterminée par un ressort mécanique (31).
